# EUROPÄISCHE PATENTANMELDUNG

(11) **EP 2 224 641 A2**
(43) Veröffentlichungstag der Anmeldung: **01.09.2010**
(21) Anmeldenummer: 10150731.7
(22) Anmeldetag: 14.01.2010
(51) Int. Cl.: H04L 12/28, H04L 12/40, H04M 11/00

(54) **Elektrisches/elektronisches Installationsgerät**

(30) Priorität: 27.02.2009 DE 102009010966
(71) Anmelder: Insta Elektro GmbH, 58511 Lüdenscheid (DE)
(72) Erfinder: Stecura, Darius, 45731, Waltrop (DE)

(57) **Zusammenfassung**

Es wird ein elektrisches/elektronisches Installationsgerät für die Gebäudesystemtechnik mit einer Leiterplatte vorgeschlagen, welches eine erste Schnittstelle zur Ankopplung an das Bussystem eines Gebäudes und eine zweite Schnittstelle für ein Anwendungsmodul aufweist, wobei ein mit einem, eine Empfangsstufe, eine Sendestufe und eine Stromversorgungseinheit aufweisender Transceiver vorgesehen ist. Zu dem Zweck, ein elektrisches/elektronisches Installationsgerät zu schaffen, welches aus einem Busgerät und einem separat händelbaren Anwendungsmodul besteht und bei welchem trotz der Verwendung nur eines einzigen im Anwendungsmodul befindlichen Mikrocontrollers sichergestellt ist, das bei Demontage des Anwendungsmoduls vom Busgerät ein Alarmtelegramm in das Bussystem abgegeben wird, ist dem Transceiver eine Demontageerkennungseinrichtung für ein vom Anwendungsmodul kommendes Alarmsignal zugeordnet, welche mit der für das Bussystem vorgesehenen ersten Schnittstelle in Verbindung steht und welche mit einem Alarmtelegrammspeicher ausgerüstet ist.

## Beschreibung

Die vorliegende Erfindung geht von einem gemäß Oberbegriff des Hauptanspruches konzipierten elektrischen/elektronischen Installationsgerät der Gebäudesystemtechnik aus.

Derartige elektrische/elektronische Installationsgeräte sind in der Regel dafür vorgesehen, auf besonders komfortable Art und Weise eine Vielzahl von in Gebäuden installierte Aktoren und Sensoren (Jalousieantriebe, Beleuchtungseinrichtungen, Fühler, Wächter usw.) bedarfsgerecht zu beeinflussen. Zu diesem Zweck sind die unterschiedlichsten Installationsgeräte, wie Schalter, Taster, Dimmer usw. bekannt geworden. Oftmals sind solche elektrischen/elektronischen Installationsgeräte zum Anschluss an ein Bussystem vorgesehen.

Durch die DE 197 26 981 C2 ist ein dem Oberbegriff des Hauptanspruches entsprechendes elektrisches/elektronisches Installationsgerät bekannt geworden. Dieses elektrische/elektronische Installationsgerät ist für den Anschluss an ein Bussystem der Gebäudesystemtechnik vorgesehen und weist deshalb entsprechende Anschlusskontakte auf. Des weiteren weist dieses elektrische/elektronische Installationsgerät ein aus Kunststoff bestehendes, zur Aufnahme der Funktionselemente vorgesehenes Gehäuse auf, wobei mehrere Funktionselemente auf zumindest einer im Gehäuse festgelegten elektrischen Leiterplatte angeordnet sind. Die Leiterplatte ist unter anderem mit einer Schnittstelle für ein Anwendungsmodul sowie einem, eine Empfangsstufe, eine Sendestufe und eine Stromversorgungseinheit aufweisenden Transceiver ausgerüstet. Das betreffende elektrische/elektronische Installationsgerät ist derart ausgeführt, so dass beim Entfernen des Anwendungsmoduls vom Busgerät ein Alarmtelegramm in das Bussystem des Gebäudes abgegeben wird und z. B. in einer Alarmzentrale aufläuft bzw. zur Anzeige gebracht wird. Bei solchermaßen ausgebildeten elektrischen/elektronischen Installationsgeräten weist sowohl das Anwendungsmodul, als auch das Busgerät zumindest einen eigenen Mikrocontroller auf, was vergleichsweise aufwändig und teuer ist.

Ausgehend von derart ausgebildeten elektrischen/elektronischen Installationsgeräten liegt der vorliegenden Erfindung die Aufgabe zugrunde, elektrische/elektronische Installationsgeräte zu schaffen, welche jeweils aus einem Busgerät und einem separat händelbaren Anwendungsmodul bestehen und bei welchen trotz der Verwendung nur eines einzigen im Anwendungsmodul befindlichen Mikrocontrollers sichergestellt ist, das bei Demontage des Anwendungsmoduls vom Busgerät ein Alarmtelegramm in das Bussystem abgegeben wird.

Erfindungsgemäß wird diese Aufgabe durch die im Hauptanspruch angegebenen Merkmale gelöst.

Bei einer solchen Ausbildung ist besonders vorteilhaft, wenn der Transceiver Bestandteil eines ASICs ist.

Weitere vorteilhafte Ausgestaltungen des erfindungsgemäßen Gegenstandes sind in den Unteransprüchen angegeben. Anhand eines Ausführungsbeispieles sei die Erfindung im Prinzip näher erläutert, dabei zeigt:

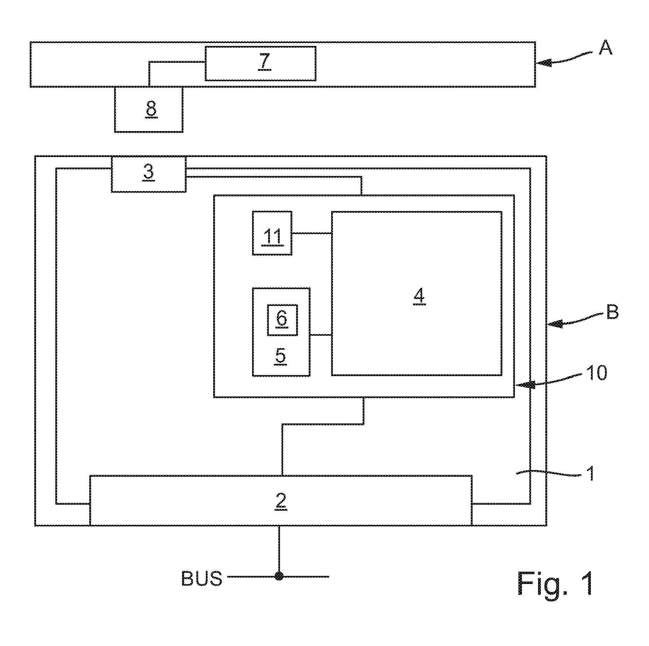

- Fig. 1:: prinziphaft ein solches elektrisches/elektronisches Installationsgerät als Blockschaltbild.

Üblicherweise bestehen solche elektrischen/elektronischen Installationsgeräte im Wesentlichen aus einem aus Kunststoff bestehenden, zur Aufnahme der Funktionselemente vorgesehenen Gehäuse, wobei mehrere Funktionselemente zumindest auf einer im Gehäuse festgelegten Leiterplatte 1 angeordnet sind. Wie insbesondere aus Figur 1 hervorgeht, besteht ein solches elektrisches/elektronisches Installationsgerät aus einem separaten Busgerät B und einem ankoppelbaren bzw. demontierbaren separaten Anwendungsmodul A. Das Busgerät B ist mit einer Leiterplatte 1 ausgerüstet, welche eine erste Schnittstelle 2 für die Ankopplung an ein Bussystem BUS des Gebäudes und eine zweite Schnittstelle 3 für die Verbindung bzw. Kopplung mit dem Anwendungsmodul A aufweist. Außerdem ist auf der Leiterplatte 1 ein mit einer Empfangsstufe, einer Sendestufe und einer Stromversorgungseinheit versehener Transceiver 4 angeordnet. Dem Transceiver 4 ist eine Demontageerkennungseinrichtung 5 zugeordnet, wobei die Demontageerkennungseinrichtung 5 mit der für das Anwendungsmodul A vorgesehenen zweiten Schnittstelle 3 über den ASIC 10 datentechnisch in Verbindung steht und mit einem Alarmtelegrammspeicher 6 ausgerüstet ist. Der Transceiver 4 ist Bestandteil eines auf der Leiterplatte 1 angeordneten ASICs 10, der auch die Demontageerkennungseinrichtung 5 beinhaltet. Das Bussystem BUS ist als KNX-Bussystem ausgeführt. Das Anwendungsmodul A wird über einen Stecker 8 mit der zweiten Schnittstelle 3 des Busgerätes B derart verbunden, so dass jederzeit eine Montage bzw. Demontage möglich ist. Lediglich das Anwendungsmodul A ist mit einem Mikrocontroller 7 ausgerüstet.

Je nach Bedarf können also unterschiedliche Anwendungsmodule A mit dem Busgerät B gekoppelt werden. Auch zu einem späteren Zeitpunkt ist ein problemloser Austausch von Anwendungsmodulen A z. B. bei Defekten oder aber wenn andere Funktionen benötigt werden möglich. Bei elektrischen/elektronischen Installationsgeräten mit nur einem Mikrocontroller 7 wickelt die Software im Mikrocontroller 7 des Anwendungsmoduls A mit Unterstützung des Transceivers 4 auch die Kommunikation zum Bussystem BUS ab und enthält zudem das Anwendungsprogramm für das zugehörige Anwendungsmodul A, welches über den Stecker 8 mit der zweiten Schnittstelle 3 des Busgerätes B in Verbindung steht. Im vorliegenden Fall ist der Mikrocontroller 7 auf einer weiteren Leiterplatte angeordnet, welche sich im Innenraum des Anwendungsmodul A befindet. Auf identisch ausgebildete Busgeräte B können, wie bereits erwähnt, verschieden ausgeführte Anwendungsmodule A aufgesteckt werden, welche jeweils spezifisch ausgeführte Anwendungsprogramme beinhalten.

Das Busgerät B enthält einen Transceiver 4 der als ASIC 10 ausgeführt ist. Die Aufgabe besteht darin, eine Demontage zu erkennen und ein entsprechendes Alarmtelegramm in das Bussystem Bus abzugeben. Zu diesem Zweck ist der ASIC 10 mit der Demontageerkennungseinrichtung 5 und einem Alarmtelegrammspeicher 6 ausgestattet.

Bei der Inbetriebnahme z.B. mit der ETS wird die Demontageerkennungseinrichtung 5 aktiviert und das Alarmtelegramm für die Demontagemeldung definiert bzw. festgelegt. Der Mikrocontroller 7 überträgt diese Daten bzw. das Alarmtelegramm anschließend zum ASIC 10. Die Demontageerkennungseinrichtung 5 im ASIC 10 überwacht nun bzw. im Betrieb ständig ob das Anwendungsmodul A noch mit dem Busgerät B in Verbindung steht. Eine Demontage des Anwendungsmoduls A wird durch einen Pegelwechsel am Eingang der Demontageerkennungseinrichtung 5 erkannt und führt zum Aussenden des Alarmtelegramms. Der Pegelwechsel wird dadurch erzeugt, weil eine elektrische Verbindung getrennt wird. Dieses Alarmtelegramm kann z. B. innerhalb des Bussystems des Gebäudes an eine Zentrale geleitet, dort ausgewertet und entsprechend zur Anzeige gebracht werden. Auf besonders kostengünstige Art und Weise ist somit eine Demontageerkennungseinrichtung bei der Verwendung nur eines einzigen Mikrocontrollers realisiert. Im ASIC 10 können auch noch weitere Funktionalitäten integriert sein, so ist es z. B. ohne weiters möglich eine Adressspeicherstelle 11 zu integrieren, die dazu dient die eigene physikalische Adresse des Busgerätes B anzulegen, um vom Bussystem Bus abgegebene Telegramme mit einer Punkt-zu-Punkt-Adressierung erkennen zu können.

## Patentansprüche

1. Elektrisches/elektronisches Installationsgerät für die Gebäudesystemtechnik mit zumindest einer Leiterplatte, welche eine erste Schnittstelle zur Ankopplung an das Bussystem eines Gebäudes und eine zweite Schnittstelle für ein Anwendungsmodul aufweist und welches mit einem, eine Empfangsstufe, eine Sendestufe und eine Stromversorgungseinheit aufweisenden Transceiver ausgerüstet ist, **dadurch gekennzeichnet, dass** dem Transceiver (4) eine Demontageerkennungseinrichtung (5) für ein vom Anwendungsmodul (A) kommendes Alarmsignal zugeordnet ist, welche mit der für das Bussystem (BUS) vorgesehenen ersten Schnittstelle (2) in Verbindung steht und welche mit einem Alarmtelegrammspeicher (6) ausgerüstet ist.

2. Elektrisches/elektronisches Installationsgerät nach Anspruch 1, **dadurch gekennzeichnet, dass** der Transceiver (4) Bestandteil eines ASICs (10) ist.

3. Elektrisches/elektronisches Installationsgerät nach einem der Ansprüche 1 oder 2, **dadurch gekennzeichnet, dass** der Transceiver (4) als ASIC (10) ausgeführt ist.

4. Elektrisches/elektronisches Installationsgerät nach einem der Ansprüche 1 bis 3, **dadurch gekennzeichnet, dass** dem Transceiver (4) ein Adressspeicher (11) zugeordnet ist.

5. Elektrisches/elektronisches Installationsgerät nach einem der Ansprüche 1 bis 4, **dadurch gekennzeichnet, dass** das Bussystem (BUS) als KNX-Bussystem ausgeführt ist.
